(19) Europäisches Patentamt
European Patent Office
Office européen des brevets

(11) **EP 4 583 593 A1**

(12) **EUROPEAN PATENT APPLICATION**
published in accordance with Art. 153(4) EPC

(43) Date of publication:
**09.07.2025 Bulletin 2025/28**

(21) Application number: **23932311.6**

(22) Date of filing: **13.11.2023**

(51) International Patent Classification (IPC):
***H04W 52/24*** *(2009.01)*

(52) Cooperative Patent Classification (CPC):
**H04B 10/1149; H04B 10/564**

(86) International application number:
**PCT/CN2023/131276**

(87) International publication number:
**WO 2025/102211 (22.05.2025 Gazette 2025/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Shenzhen Taiden Industrial Co., Ltd Shenzhen, Guangdong 518000 (CN)**

(72) Inventor: **ZHANG, Zhishuo Shenzhen, Guangdong 518000 (CN)**

(74) Representative: **Ipside
7-9 Allée Haussmann
33300 Bordeaux Cedex (FR)**

(54) **METHOD FOR CONTROLLING TRANSMISSION POWER OF DIGITAL INFRARED CONFERENCE UNIT, COMMUNICATION DEVICE, AND MEDIUM**

(57)    A method for controlling transmission power of a digital infrared conference unit, a communication apparatus, and a medium are provided in embodiments of the disclosure. The method includes the following. At least one infrared conference unit sends a first uplink signal to an infrared conference host at a first transmission power. The infrared conference host obtains a first signal strength of the first uplink signal of the at least one infrared conference unit, and sends a first downlink signal containing first control data to the at least one infrared unit. Each infrared conference unit determines a second transmission power according to the first control data, and sends a second uplink signal to the infrared conference host at the second transmission power, so that the signal strength of the signal of each infrared conference unit received by the infrared conference host is the same.

FIG. 2A

## Description

TECHNICAL FIELD

The disclosure relates to the field of digital infrared conference systems, and in particular to a method for controlling transmission power of a digital infrared conference unit, a communication apparatus, and a medium.

BACKGROUND

An infrared conference host sends a downlink infrared signal and receives infrared uplink signals from multiple infrared conference units via an infrared transceiver. Infrared conference units use different carrier frequencies to send infrared uplink signals. Since distances between the infrared conference units and the infrared transceiver are different, the infrared uplink signals of the infrared conference units received by the infrared transceiver will have different amplitudes, if the infrared conference units use the same transmission power to send the infrared uplink signals. An uplink infrared signal of an infrared conference unit close to the infrared transceiver will have an amplitude that is too large, so that the uplink infrared signal is prone to have nonlinear distortion after passing through an amplifier, and a large number of harmonic signals are produced and interfere with uplink infrared signals of other infrared conference units. An uplink infrared signal of an infrared conference unit far away will have a low amplitude, and the quantization accuracy of the uplink infrared signal after being quantized by an analog-to-digital converter (ADC) is not enough which affects demodulation of an infrared digital signal. Therefore, how to send the uplink infrared signal of the infrared conference unit is a technical problem that needs to be solved.

SUMMARY

A method for controlling transmission power of a digital infrared conference unit, a communication apparatus, and a medium are provided in embodiments of the disclosure. Automatic adjustment of the transmission power of the infrared conference unit can be achieved, so that signal strengths of signals received by the infrared conference host from different infrared conference units are the same.

In a first aspect, a method for controlling transmission power of a digital infrared conference unit is provided in embodiments of the disclosure as follows. A first uplink signal of each of at least one infrared conference unit is received from the at least one infrared conference unit among multiple conference units, where the first uplink signal of each infrared conference unit is sent by each infrared conference unit at first transmission power of each infrared conference unit. A first signal strength of the first uplink signal of each infrared conference unit is obtained. First control data for each infrared conference unit is determined according to the first signal strength corresponding to each infrared conference unit and a preset signal strength, where the first control data for each infrared conference unit is used to determine a next transmission power of each infrared conference unit. A first downlink signal is sent to the at least one infrared conference unit, where the first downlink signal contains the first control data for each infrared conference unit. A second uplink signal of each infrared conference unit is received from each infrared conference unit, where a second signal strength of the second uplink signal of each infrared conference unit is the preset signal strength, the second uplink signal is sent by each infrared conference unit at second transmission power, and the second transmission power is determined by each infrared conference unit according to the first control data for each infrared conference unit.

In a second aspect, an infrared conference host is provided in embodiments of the disclosure. The infrared conference host includes a transceiving unit and a processing unit. The transceiving unit is configured to receive a first uplink signal of each of at least one infrared conference unit from the at least one infrared conference unit among multiple infrared conference units. The transceiving unit is further configured to obtain a first signal strength of the first uplink signal of each infrared conference unit. The processing unit is configured to determine first control data for each infrared conference unit according to the first signal strength corresponding to each infrared conference unit and a preset signal strength. The transceiving unit is configured to send a first downlink signal to the at least one infrared conference unit; and receive a second uplink signal of each infrared conference unit from each infrared conference unit.

In a third aspect, an infrared conference unit is provided in embodiments of the disclosure. The infrared conference unit includes a transceiving unit and a processing unit. The transceiving unit is configured to send a first uplink signal to an infrared conference host at first transmission power; receive a first downlink signal for the first uplink signal from the infrared conference host; and obtain first control data for a first infrared conference unit from the first downlink signal. The processing unit is configured to determine second transmission power of each infrared conference unit according to first control data for each infrared conference unit. The transceiving unit is configured to determine second transmission power of the first infrared conference unit according to the first control data for the first infrared conference unit; and send a second uplink signal to the infrared conference host at the second transmission power, where a second signal strength of the second uplink signal of the first infrared conference unit received by the infrared conference host is a preset signal strength.

In a fourth aspect, a communication apparatus is provided in embodiments of the disclosure. The communication apparatus includes a processor and a memory. The processor is connected to the memory. The memory is configured to store a computer program. The processor is configured to perform the computer program stored in the memory to make the communication apparatus perform the method in the first aspect.

In a fifth aspect, a computer-readable storage medium storing a computer program is provided in embodiments of the disclosure. The computer program, when executed by a computer, causes the computer to perform the method of the first aspect.

Beneficial effects in the embodiments of the disclosure are as follows. It can be seen that in the embodiments of the disclosure, the infrared conference host can determine the first signal strength of the first uplink signal according to the first uplink signal received from each infrared conference unit, and determine the control data for each infrared conference unit according to the first signal strength corresponding to each infrared conference unit and the preset signal strength. Each infrared conference unit can determine the second transmission power according to the control data for each infrared conference unit, and determine the second uplink signal according to the second transmission power of each infrared conference unit, thereby ensuring that signal strengths of signals received by the infrared conference host from each of the infrared conference units are the same.

BRIEF DESCRIPTION OF THE DRAWINGS

To describe the technical solutions in embodiments of the disclosure or in related art more clearly, the following briefly introduces the accompanying drawings required for describing the embodiments of the disclosure or the related art.

FIG. 1A is a schematic diagram of an infrared conference system provided in embodiments of the disclosure.

FIG. 1B is a schematic diagram illustrating a principle of an infrared conference system provided in embodiments of the disclosure.

FIG. 2A is a schematic flow chart of a method for controlling transmission power of a digital infrared conference unit provided in embodiments of the disclosure.

FIG. 2B is a schematic diagram illustrating first signal strengths provided in embodiments of the disclosure.

FIG. 2C is a schematic diagram illustrating second signal strengths provided in embodiments of the disclosure.

FIG. 3 is a schematic diagram of an infrared conference host provided in embodiments of the disclosure.

FIG. 4 is a schematic diagram of an infrared conference unit provided in embodiments of the disclosure.

FIG. 5 is a schematic diagram of a communication apparatus provided in embodiments of the disclosure.

DETAILED DESCRIPTION

The following will describe technical solutions of embodiments of the present disclosure clearly and comprehensively with reference to accompanying drawings. Embodiments described herein are merely some embodiments, rather than all embodiments, of the disclosure. According to the embodiments of the present disclosure, other embodiments obtained by those of ordinary skill in the art shall fall within the protection scope of the disclosure.

In the specification, claims, and accompanying drawings of this application, the terms "first", "second", "third", "fourth" and so on are intended to distinguish between different objects but do not indicate a particular order. In addition, the terms "including", "comprising", or any other variant thereof, are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

The term "embodiment" or "implementation" referred to herein means that a particular feature, structure, or characteristic described in conjunction with the embodiment may be contained in at least one embodiment of the present disclosure. The phrase appearing in various places in the specification does not necessarily refer to the same embodiment, nor does it refer to an independent or alternative embodiment that is mutually exclusive with other embodiments. It is expressly and implicitly understood by those skilled in the art that an embodiment described herein may be combined with other embodiments.

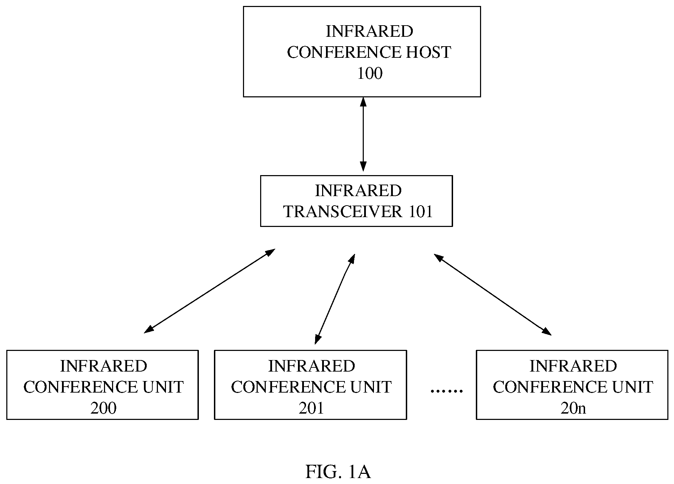

Reference is made to FIG. 1A which is a schematic diagram of an infrared conference system provided in embodiments of the disclosure. The infrared conference system includes an infrared conference host 100, an infrared transceiver 101, an infrared conference unit 200, an infrared conference unit 201, ..., and an infrared conference unit 20n. The infrared conference unit 200, the infrared conference unit 201, ..., and the infrared conference unit 20n communicate with the infrared conference host 100 at different frequencies. The infrared conference unit 200 is mainly used as an example for explanation in the disclosure. As illustrated in FIG. 1A, the infrared transceiver 101 is an external infrared transceiver, and the infrared transceiver 101 may be an internal infrared transceiver in actual applications, which is not limited in the disclosure.

In some possible embodiments, according to the infrared conference system as illustrated in FIG. 1A, the infrared conference unit 200 sends a first uplink signal to the infrared conference host 100 at first transmission power. The infrared transceiver 101 receives the first uplink signal. The infrared conference host 100 obtains a first signal strength of the uplink signal, and determines first control data for the infrared conference unit 200 according to the first signal strength and a preset signal strength. After the infrared conference host 100 determines first control data for each infrared conference unit, the infrared transceiver 101 sends a first downlink signal containing the first control data for each infrared conference unit. The infrared conference unit 200 receives the first downlink signal, determines second transmission power according to the first control data for the infrared conference unit 200, and sends a second uplink signal at the second transmission power. The infrared transceiver 101 receives the second uplink signal. A second signal strength of the second uplink signal is the preset signal strength. The second signal strength received by the infrared conference host 100 is the preset signal strength.

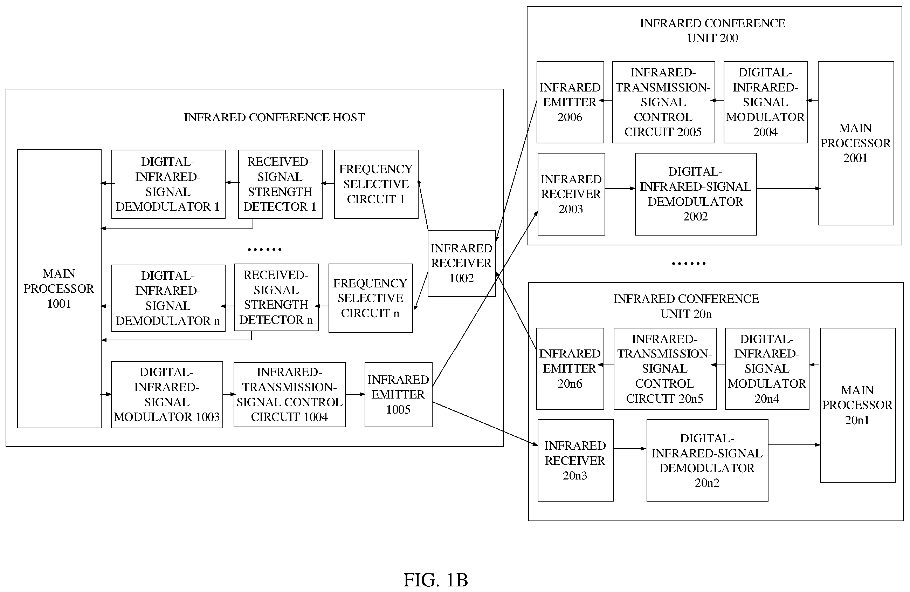

Reference is made to FIG. 1B which is a schematic diagram illustrating a principle of an infrared conference system provided in embodiments of the disclosure.

An infrared conference host in the infrared conference system includes a main processor 1001, multiple digital-infrared-signal demodulators (such as a digital-infrared-signal demodulator 1, ..., and a digital-infrared-signal demodulator n illustrated in FIG. 1B), multiple received-signal strength detectors (such as a received-signal strength detector 1, ..., and a received-signal strength detector n illustrated in FIG. 1B), multiple frequency selective circuits (such as a frequency selective circuit 1, ..., and a frequency selective circuit n illustrated in FIG. 1B), an infrared receiver 1002, a digital-infrared-signal modulator 1003, an infrared-transmission-signal control circuit 1004, and an infrared emitter 1005. The frequency selective circuit 1, the digital-infrared-signal demodulator 1, and the received-signal strength detector 1 are mainly used as examples in the disclosure to illustrate the internal connection structure of the infrared conference host. In practical applications, connections among the frequency selective circuit, the digital-infrared-signal demodulator, and the received-signal strength detector are similar to connections among the frequency selective circuit 1, the digital-infrared-signal demodulator 1, and the received-signal strength detector 1. The infrared receiver 1002 is connected to the frequency selective circuit 1. The frequency selective circuit 1 is connected to the received-signal strength detector 1. The received-signal strength detector 1 is connected to the digital-infrared-signal demodulator 1, and is also connected to the main processor 1001. The main processor 1001 is further connected to the digital-infrared-signal modulator 1003. The digital-infrared-signal modulator 1003 is further connected to the infrared-transmission-signal control circuit 1004. The infrared-transmission-signal control circuit 1004 is further connected to the infrared emitter 1005.

An infrared conference unit 200 is taken as an example. The infrared conference unit 200 in the infrared conference system includes a main processor 2001, a digital-infrared-signal demodulator 2002, an infrared receiver 2003, a digital-infrared-signal modulator 2004, an infrared-transmission-signal control circuit 2005, and an infrared emitter 2006. The infrared receiver 2003 is connected to the infrared emitter 1005 in the infrared conference host, and is also connected to a digital-infrared-signal demodulator 2002. The digital-infrared-signal demodulator 2002 is further connected to the main processor 2001. The main processor 2001 is further connected to the digital-infrared-signal modulator 2004. The digital-infrared-signal modulator 2004 is further connected to the infrared-transmission-signal control circuit 2005. The infrared-transmission-signal control circuit 2005 is further connected to the infrared emitter 2006. The infrared emitter 2006 is further connected to the infrared receiver 1002 in the infrared conference host.

It is noted that the infrared conference unit 200 is mainly used as an example for explanation in the disclosure. In practical applications, the structure of each infrared conference unit (such as the infrared conference unit 200 ... and the infrared conference unit 20n illustrated in FIG. 1B) is similar to the structure of the infrared conference unit 200. Each infrared conference unit corresponds to a frequency selective circuit in the infrared conference host. The number of infrared conference units when speaking is enabled is the same as the number of frequency selective circuits in the infrared conference host. The number of frequency selective circuits in the infrared conference host is one more than the maximum number of microphones allowed to be enabled, and the additional one frequency selective circuit serves as a bursty channel. In the embodiments of the disclosure, the infrared conference unit 200 corresponds to the frequency selective circuit 1 in the infrared conference host. In some possible embodiments, according to the infrared conference system illustrated in FIG. 1B, the infrared emitter 2006 in the infrared conference unit 200 sends the first uplink signal at the first transmission power. The infrared receiver 1002 in the infrared conference host receives the first uplink signal. The frequency selective circuit 1 corresponding to the infrared conference unit 200 receives the first uplink signal of the infrared conference unit 200. The received-signal strength detector 1 obtains the first signal strength of the first uplink signal, and sends the first signal strength to the main processor 1001. The digital-infrared-signal demodulator 1 analyzes the first uplink signal and sends an analyzed first uplink signal to the main processor 1001. The main processor 1001 determines the first control data for the infrared conference unit 200 according to the first signal strength and the preset signal strength. The digital-infrared-signal modulator 1003 receives the first control data for each infrared conference unit. After the first control data for each infrared conference unit is processed by the digital-infrared-signal modulator 1003 and the infrared-transmission-signal control circuit 1004, the first downlink signal containing the first control data for each infrared conference unit is sent via the infrared emitter 1005. The infrared receiver 2003 in the infrared conference unit 200 receives the first downlink signal containing the first control data for each infrared conference unit. The digital-infrared-signal demodulator 2002 demodulates the first downlink signal containing the first control data for each infrared conference unit, and then sends the first control data for the infrared conference unit 200 to the main processor 2001 for processing. The main processor 2001 sends a processed second uplink signal containing the first control data for the infrared conference unit 200 to the digital-infrared-signal modulator 2004, to determine the second transmission power. The digital-infrared-signal modulator 2004 sends the second transmission power to the infrared-transmission-signal control circuit 2005. The infrared-transmission-signal control circuit 2005 adjusts the first transmission power to the second transmission power. The infrared emitter 2006 sends the second uplink signal at the second transmission power. The infrared receiver 1002 in the infrared conference host receives the second uplink signal. The second signal strength of the second uplink signal is the preset signal strength.

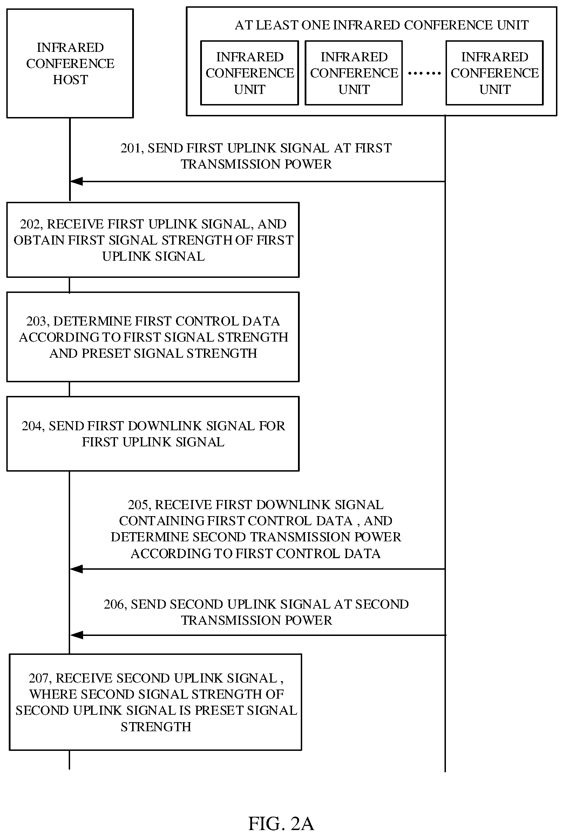

Reference is made to FIG. 2A which is a schematic flow chart of a method for controlling transmission power of a digital infrared conference unit provided in embodiments of the disclosure. The method in the embodiment includes the following operations.

At 201, the infrared conference unit sends a first uplink signal to an infrared conference host at first transmission power.

The first uplink signal of each infrared conference unit is sent by each infrared conference unit at first transmission power of each infrared conference unit.

It is noted that, the first transmission power is the maximum transmission power of the infrared conference unit, if the first uplink signal is sent by the infrared conference unit to the infrared conference host for the first time.

It can be seen that, the infrared conference unit will send the first uplink signal at the maximum transmission power, when the infrared conference unit sends the first uplink signal for the first time, so that a signal strength can be increased, signal attenuation and interference can be reduced to the greatest extent, signal transmission quality and stability can be improved, and reliability and coverage of signal transmission can be ensured, thereby ensuring that all parties involved in the meeting can receive strong and stable signals, and improving the effect of the meeting and the experience of the participants.

At 202, the infrared conference host receives the first uplink signal, and obtains a first signal strength of the first uplink signal.

For example, after the infrared conference unit sends the first uplink signal to the infrared conference host at the first transmission power, a receiver in the infrared conference host receives the first uplink signal, and the infrared conference host obtains the first signal strength of the first uplink signal. The first signal strength is a signal strength of the first uplink signal when the first uplink signal is received by the infrared conference host.

At 203, the infrared conference host determines first control data according to the first signal strength and a preset signal strength.

For example, the first control data for each infrared conference unit is determined according to the first signal strength corresponding to each infrared conference unit and the preset signal strength. The first control data for each infrared conference unit is the difference between the first signal strength corresponding to each infrared conference unit and the preset signal strength. In a possible embodiment, an environment noise figure needs to be obtained, before the infrared conference host determines the first control data for each infrared conference unit according to the first signal strength corresponding to each infrared conference unit and the preset signal strength. A third signal strength of the first uplink signal is predicted according to the environment noise figure, a distance between the infrared conference host and each infrared conference unit, and the first transmission power.

First, a signal strength loss in free space without obstacles is calculated. The signal strength loss can be represented by equation (1).

$$F = a * \lg(d) + b * \lg(p) + c * \lg\left(\frac{4\pi}{3 \times 10^8}\right) \qquad \text{Equation (1)}$$

F is the signal strength loss, d is the distance from the infrared conference unit to the infrared conference host, p is the environment noise figure, and a, b, and c are preset parameters.

Second, the third signal strength of the first uplink signal is predicted according to the signal strength loss. The third signal strength can be represented by equation (2).

$$X = Y - F - p \hspace{4cm} \text{Equation (2)}$$

X is the predicted third signal strength, Y is the first signal strength corresponding to the first transmission power, and p is the environment noise figure.

It can be seen that the third signal strength of the first uplink signal is predicted according to the environment noise figure, the distance between the infrared conference host and the infrared conference unit, and the first transmission power, so that a third signal strength close to a signal strength, when no accidental factors occur, can be obtained, thereby making the obtained first control data more accurate.

In a possible embodiment, the difference between the first signal strength and the preset signal strength is directly used as first control data for a first infrared conference unit according to the first signal strength and the preset signal strength, if the difference between the third signal strength and the first signal strength is less than or equal to a first threshold. The first infrared conference unit is any one of at least one infrared conference unit.

In another possible embodiment, t-1 uplink signals sent by the first infrared conference unit before sending the first uplink signal are obtained, if the difference between the third signal strength and the first signal strength is greater than the first threshold. The first control data for the first infrared conference unit is determined according to t uplink signals and the first signal strength.

Specifically, the infrared conference host predicts a fourth signal strength of each uplink signal according to a noise figure, determines a fifth signal strength of each uplink signal according to each uplink signal, and determines the difference between the fourth signal strength of each of the t uplink signals and the fifth signal strength of each of the t uplink signals. The first control data for the first infrared conference unit is determined according to the first signal strength and the preset signal strength, if differences between the fourth signal strengths and the fifth signal strengths corresponding to the t uplink signals are all greater than the first threshold. The difference between a signal strength corresponding to the first transmission power and the preset signal strength is used as the first control data for the first infrared conference unit, if the difference among differences between the fourth signal strengths and the fifth signal strengths corresponding to the t uplink signals is less than or equal to the first threshold.

For example, assuming that the preset signal strength is 12 dB, the first threshold is 0.5 dB, the predicted third signal strength is 10 dB, and the first signal strength of the first signal received by the infrared conference host is 10 dB, the difference between the third signal strength and the first signal strength is 0 dB which is less than the first threshold 0.5 dB, and the difference between the first signal strength 10 dB and the preset signal strength 12 dB is directly used as the first control data for the first infrared conference unit.

If the predicted third signal strength is 10 dB, and the first signal strength of the first signal received by the infrared conference host is 5 dB, the difference between the first signal strength 5 dB and the predicted third signal strength 10 dB is 5 dB which is greater than the first threshold 0.5 dB, and then the t-1 uplink signals sent by the first infrared conference unit before sending the first uplink signal are obtained. The infrared conference host determines, according to the t-1 uplink signals, the fourth signal strength predicted according to the noise figure and the corresponding fifth signal strength. If the corresponding fifth signal strengths determined according to the t-1 uplink signals are all 5 dB, differences between the fifth signal strengths and the fourth signal strength 10 dB are all greater than the first threshold 0.5 dB, and the difference 7 dB between the first signal strength 5dB and the preset signal strength 12dB is used as the first control data for the first infrared conference unit. If a fifth signal strength among the corresponding fifth signal strengths determined according to the t-1 second uplink signals is 10 dB, the difference between the fifth signal strength and the fourth signal strength 10 dB is 0 dB which is less than the first threshold 0.5 dB, and then the difference between the signal strength corresponding to the first transmission power and the preset signal strength is used as the first control data for the first infrared conference unit. If the signal strength corresponding to the first transmission power is 15 dB, the difference 3 dB between the signal strength 15 dB corresponding to the first transmission power and the preset signal strength 12 dB is used as the first control data for the first infrared conference unit.

It can be seen that an infrared signal received by the infrared host may have great attenuation, if the infrared signal is blocked by accidental factors, for example, someone or some object blocks the infrared signal, when each infrared conference unit performs uplink transmission. A signal strength of a signal received by the infrared conference host in a stable environment is predicted according to the first signal strength and an environment noise figure for the stable environment, that is, a case where there are no accidental factors. Whether an accidental factor is currently present, or whether the accidental factor will disappear in a short time is determined by comparing the signal strength of the signal currently received by the infrared conference host with a predicted signal strength. If the difference between the two signal strengths is small, it is considered that there is no accidental factor at present, and the signal strength of the signal currently received is used to control a next transmission power. If the difference between the two signals is large, signal strengths corresponding to previous t detections are analyzed. If the signal strengths corresponding to the previous t detections are all greatly different from the predicted signal strength, it means that the accidental factor will not be eliminated in a short time, and the signal strength of the signal currently received is used to control the next transmission power. If a signal strength among the signal strengths corresponding to the previous *t* detections is not greatly different from the predicted signal strength, the infrared conference unit determines the first signal strength according to the first uplink signal corresponding to the first transmission power. The first signal strength is used to control the next transmission power. By comparing the signal strengths multiple times, the influence of accidental factors can be eliminated, so that more reliable signal strength data can be obtained, and accuracy and reliability of the control data can be improved.

At 204, the infrared conference host sends a first downlink signal for the first uplink signal.

After the at least one infrared conference unit sends the first uplink signal, the infrared conference host obtains the first signal strength according to the first uplink signal, determines the first downlink signal containing the first control data for each infrared conference unit according to the first signal strength and the preset signal strength, and sends the first downlink signal to the infrared conference unit via the receiver in the infrared conference host.

It is noted that there is only one downlink signal line corresponding to the infrared conference host. Therefore, when multiple infrared conference units send uplink signals to the infrared conference host at the same time, the infrared conference host sends one downlink signal to the multiple conference units via the downlink signal line, and the downlink signal contains control data for the multiple infrared conference units. Accordingly, the infrared conference host sends the downlink signal by broadcasting. Each infrared conference unit analyzes the downlink signal to obtain respective control data, and adjust the transmission power according to the control data.

For example, when four infrared conference units (an infrared conference unit 1, an infrared conference unit 2, an infrared conference unit 3, and an infrared conference unit 4) simultaneously send first uplink signals to the infrared conference host, the infrared conference host will send one first downlink signal to the four infrared conference units via the downlink signal line. The first downlink signal contains responding information for the first uplink signals of the four infrared conference units and first control data for the four infrared conference units. Accordingly, the infrared conference unit 1, the infrared conference unit 2, the infrared conference unit 3, and the infrared conference unit 4 obtain the first downlink signal. The infrared conference unit 1, the infrared conference unit 2, the infrared conference unit 3, and the infrared conference unit 4 analyze the first downlink signal to obtain their respective responding information and the first control data for the four infrared conference units. The infrared conference unit 1, the infrared conference unit 2, the infrared conference unit 3, and the infrared conference unit 4 will adjust their respective transmission power according to their respective first control data.

At 205, the infrared conference unit receives the first downlink signal containing the first control data, and determines second transmission power according to the first control data.

The first control data for each infrared conference unit contains the difference between a signal strength of a signal of each infrared conference unit received by the infrared conference host last time and the preset signal strength. The infrared conference host receives the first downlink signal containing the first control data for each infrared conference unit, and obtains a power adjustment coefficient according to the difference between the signal strength corresponding to each infrared conference unit and the preset signal strength in the first control data for each infrared conference unit. The infrared conference unit adjusts a power by adjusting a gain via an amplifier according to the power adjustment coefficient. The gain refers to a signal amplification multiple of the output of the amplifier to the input of the amplifier. When the signal strength of the received signal is less than the preset signal strength, the amplifier increases the gain to correspond to the difference. The first transmission power is correspondingly increased. The second transmission power is obtained by amplifying the first transmission power. When the signal strength of the received signal is equal to the preset signal strength, the gain for the amplifier is not changed. The first transmission power is directly used as the second transmission power. When the signal strength of the received signal is greater than the preset signal strength, the amplifier reduces the gain to correspond to the difference. The first transmission power is correspondingly reduced. The second transmission power is obtained by reducing the first transmission power.

It can be seen that the signal may not be sent stably to a receiving device if the transmission power is too small, resulting in a decrease in signal quality. Interference between signals may be caused if the transmission power is too large. The infrared conference unit increases or reduces the first transmission power accordingly via the amplifier to ensure stable and accurate signal transmission, so that users can receive stable information when using the infrared conference system, interoperability and overall performance of the system are improved, and performance of the conference system is improved.

At 206, the infrared conference unit sends the second uplink signal at the second transmission power.

Each infrared conference unit sends the second uplink signal at the second transmission power after completing the adjustment of the first transmission power and obtaining the second transmission power.

At 207, the infrared conference host receives the second uplink signal. The second signal strength of the second uplink signal is the preset signal strength.

The infrared conference host receives the second uplink signal from each infrared conference unit, and determines the second signal strength of the second uplink signal. It is noted that the second signal strength is the preset strength. The second signal strength is a signal strength of a signal received at the infrared conference host, and is not a signal strength of the second uplink signal sent by the infrared conference unit.

It can be seen that the second signal strength of the second uplink signal received by the infrared conference host from each infrared conference unit is the preset signal strength. Amplitude of uplink infrared signals of all infrared conference units received by a transceiver in the infrared conference host is consistent, thereby ensuring that the infrared signal is not prone to linear distortion after passing through the amplifier, avoiding the generation of excessive harmonic signals which interfere with uplink signals of other infrared conference units, and ensuring the quantization accuracy, so that modulation of the infrared digital signal will not be affected.

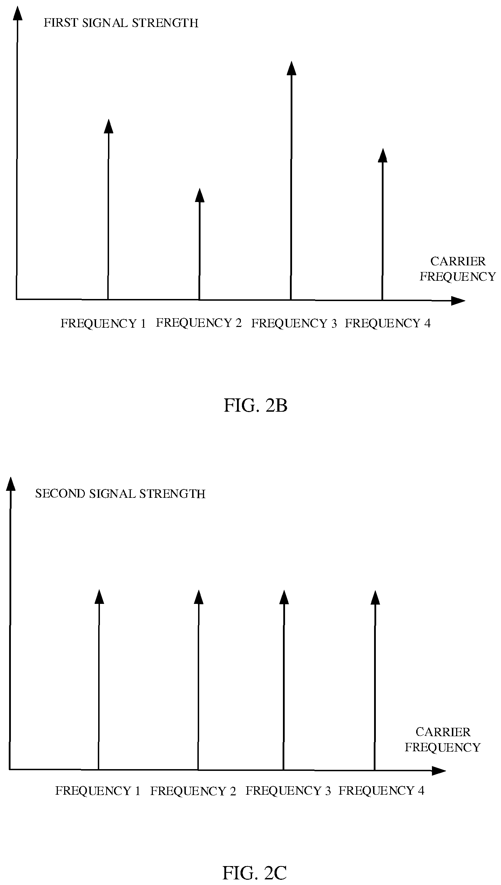

For example, as illustrated in FIG. 2B which is a schematic diagram illustrating first signal strengths provided in embodiments of the disclosure, the first signal strengths of the signals received by the infrared conference host from four infrared conference units are different, when the four infrared conference units send uplink signals. The four infrared conference units are at different carrier frequencies (a frequency 1, a frequency 2, a frequency 3, and a frequency 4), and the signal strengths of the signals received by the infrared conference host from the four infrared conference units at different frequencies are different. As illustrated in FIG. 2C which is a schematic diagram illustrating second signal strengths provided in embodiments of the disclosure, second signal strengths of the signals received by the infrared host from the four infrared conference units are all the same, after the first transmission power of the four infrared conference units are adjusted according to the first control data. The four infrared conference units are still at different carrier frequencies (the frequency 1, the frequency 2, the frequency 3, and the frequency 4), but the signal strengths, i.e., the second signal strengths of the next signals received by the infrared conference host from the four infrared conference units at different frequencies become the same, and the signal strengths are all preset signal strengths.

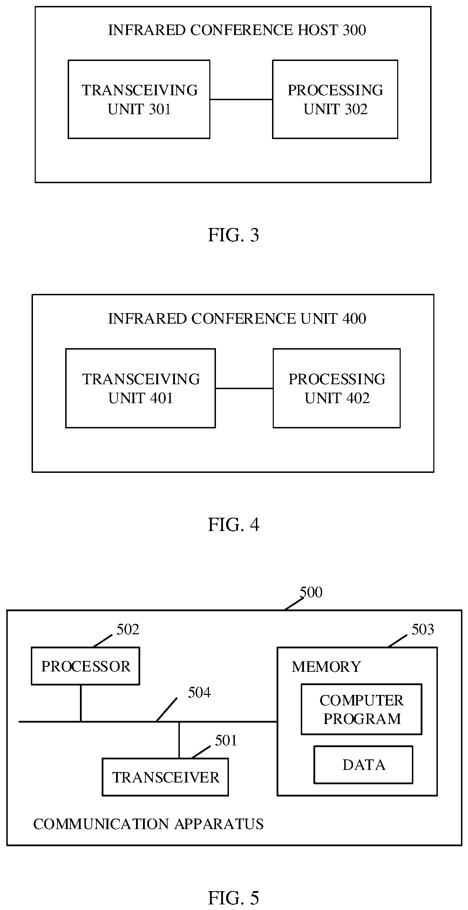

Reference is made to FIG. 3 which is a schematic diagram of an infrared conference host provided in embodiments of the disclosure. As illustrated in FIG. 3, an infrared conference host 300 includes a transceiving unit 301 and a processing unit 302. The transceiving unit 301 is configured to receive a first uplink signal of each of at least one infrared conference unit from the at least one infrared conference unit among multiple infrared conference units; and obtain a first signal strength of the first uplink signal of each infrared conference unit. The processing unit 302 is configured to determine first control data for each infrared conference unit according to the first signal strength corresponding to each infrared conference unit and a preset signal strength. The transceiving unit 301 is configured to send a first downlink signal to the at least one infrared conference unit; and receive a second uplink signal of each infrared conference unit from each infrared conference unit.

In some possible embodiments, before determining the first control data for each infrared conference unit according to the first signal strength corresponding to each infrared conference unit and the preset signal strength, the processing unit 302 is further configured to obtain an environment noise figure, and predict a third signal strength of the first uplink signal of each infrared conference unit according to the environment noise figure, a distance to each infrared conference unit, and first transmission power of each infrared conference unit.

The first control data for each infrared conference unit is determined according to the first signal strength corresponding to each infrared conference unit and the preset signal strength as follows.

For a first infrared conference unit, the difference between a third signal strength of the first infrared conference unit and a first signal strength corresponding to the first infrared conference unit is calculated. The first infrared conference unit is any one of the at least one infrared conference unit. First control data for the first infrared conference unit is determined according to the first signal strength corresponding to the first infrared conference unit and the preset signal strength, if the difference is less than or equal to a first threshold. $t$-1 second uplink signals sent by the first infrared conference unit before sending the first uplink signal are obtained, if the first difference is greater than the first threshold; and the first control data for the first infrared conference unit is determined according to $t$ uplink signals and the first signal strength, where the $t$ uplink signals include the first uplink signal and the $t$-1 second uplink signals.

In some possible embodiments, in terms of determining the first control data for the first infrared conference unit according to the $t$ uplink signals and the first signal strength, the processing unit 302 is specifically configured to determine the difference between a fourth signal strength of each of the $t$ uplink signals and a fifth signal strength of each of the $t$ uplink signals, where the fourth signal strength is determined by the infrared conference host according to a noise figure, and the fifth signal strength is determined by the infrared conference host according to each uplink signal; determine the first control data for the first infrared conference unit according to the first signal strength and the preset signal strength, if differences corresponding to the $t$ uplink signals are all greater than the first threshold; and determine the first control data for the first infrared conference unit according to the first transmission power, if the difference among the differences corresponding to the $t$ uplink signals is less than or equal to the first threshold.

In some possible embodiments, the first control data for each infrared conference unit is the difference between the first signal strength corresponding to each infrared conference unit and the preset signal strength.

In some possible embodiments, the first transmission power of each infrared conference unit is the maximum transmission power of each infrared conference unit, when the first uplink signal of each infrared conference unit is sent by each infrared conference unit to the infrared conference host for the first time.

Reference is made to FIG. 4 which is a schematic diagram of an infrared conference unit provided in embodiments of the disclosure. As illustrated in FIG. 4, an infrared conference unit 400 includes a transceiving unit 401 and a processing unit 402. The transceiving unit 401 is configured to send a first uplink signal to an infrared conference host at first transmission power; receive a first downlink signal for the first uplink signal from the infrared conference host; and obtain first control data for a first infrared conference unit from the first downlink signal. The processing unit 402 is configured to determine second transmission power of each infrared conference unit according to first control data for each infrared conference unit. The transceiving unit 401 is configured to determine second transmission power of the first infrared conference unit according to the first control data for the first infrared conference unit; and send a second uplink signal to the infrared conference host at the second transmission power, so that a second signal strength of the second uplink signal of the first infrared conference unit received by the infrared conference host is a preset signal strength.

In some possible embodiments, in terms of determining the second transmission power of the first infrared conference unit according to the first control data for the first infrared conference unit, the processing unit 402 is specifically configured to obtain a power adjustment coefficient corresponding to the first infrared conference unit according to the first control data for the first infrared conference unit, adjust the first transmission power of the first infrared conference unit according to the power adjustment coefficient corresponding to the first infrared conference unit, and obtain the second transmission power of the first infrared conference unit.

In some possible embodiments, the first transmission power is the maximum transmission power of the first infrared conference unit, if the first uplink signal is sent by the first infrared conference unit to the infrared conference host for the first time.

Reference is made to FIG. 5 which is a schematic diagram of a communication apparatus provided in embodiments of the disclosure. A communication apparatus 500 includes a transceiver 501, a processor 502, and a memory 503 which are connected together via a bus 504. The memory 503 is configured to store relevant computer programs and data, and can send the stored data to the processor 502.

The transceiver 501 is configured to send a first uplink signal at first transmission power, receive the first uplink signal, receive a first downlink signal containing first control data for each infrared conference unit, send a second uplink signal at second transmission power, and receive a second uplink signal, where a second signal strength of the second uplink signal is a preset signal strength.

The processor 502 is configured to obtain a first signal strength of the first uplink signal, and determine the first control data for each infrared conference unit according to the first signal strength corresponding to each infrared conference unit and the preset signal strength.

The memory 503 is configured to store computer programs and data.

It is noted that a function corresponding to each of the processor 502 and the memory 503 may be implemented by using a hardware design, or may be implemented by using a software design, or may be implemented by combining software and hardware, which is not limited herein.

Embodiments of the disclosure further provide a computer-readable storage medium. The computer-readable storage medium stores a computer program. When the program is executed by a processor, a procedure related to the infrared conference host in the method for controlling the transmission power of the digital infrared conference unit provided in the foregoing method embodiments may be implemented.

Embodiment of the disclosure further provides a computer program product. When the computer program product runs on a computer or a processor, the computer or the processor is enabled to perform one or more operations of any one of the foregoing methods for controlling the transmission power of the digital infrared conference unit. When component modules of the foregoing devices are implemented in a form of a software functional unit and sold or used as an independent product, the component modules may be stored in the computer-readable storage medium.

It is understood that, the processor mentioned in embodiments of the disclosure may be a central processing unit (CPU), may be another general-purpose processor, a digital signal processor (DSP), an application-specific integrated circuit (ASIC), a field programmable gate array (FPGA), or another programmable logic device, discrete gate or transistor logic device, discrete hardware component, or the like. The general-purpose processor may be a microprocessor, or the processor may be any conventional processor or the like.

It may be further understood that the memory mentioned in embodiments of the disclosure may be a volatile memory or a nonvolatile memory, or may include a volatile memory and a nonvolatile memory. The nonvolatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), used as an external cache. By way of example and not limitation, RAMs in many forms may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), and a direct rambus random access memory (DR RAM).

It is noted that when the processor is a general-purpose processor, a DSP, an ASIC, an FPGA, or another programmable logic device, discrete gate or transistor logic device, or discrete hardware component, the memory (a storage module) is integrated into the processor.

It is noted that the memory described herein is intended to include but not limited to these memories and any memory of another appropriate type.

It may be further understood that "first", "second", "third", "fourth", and various numbers in the specification are merely used for differentiation for ease of description, and are not construed as a limitation to the scope of the disclosure.

It is understood that the term "and/or" in the specification describes only an association relationship for describing associated objects and represents that three relationships may exist. For example, A and/or B may represent the following three cases: only A exists, both A and B exist, and only B exists. In addition, the character "/" in the specification generally indicates an "or" relationship between the associated objects.

It is understood that, in embodiments of the disclosure, sequence numbers of the foregoing processes do not mean execution sequences. The execution sequences of the processes are determined according to functions and internal logic of the processes, and do not constitute any limitation to implementation processes of embodiments of the disclosure.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. Persons skilled in the art may use different methods to implement the described functions for each particular application, but it should not be considered that the implementation goes beyond the scope of the disclosure.

It may be clearly understood by persons skilled in the art that, for the purpose of convenient and brief description, for a detailed working process of the foregoing systems, apparatuses, and units, reference can be made to a corresponding process in the foregoing method embodiment. Details are not described herein again.

In the several embodiments provided in the disclosure, it is understood that the disclosed system, apparatus, and method may be implemented in other manners. For example, the foregoing apparatus embodiments are merely examples. For example, division into the units is merely logical function division and may be another division during actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electronic, mechanical, or other forms.

The units described as separate parts may be or may not be physically separate, and parts displayed as units may be or may not be physical units, that is, they may be located in one position, or may be distributed on multiple network units. Some or all of the units may be selected depending on actual requirements to achieve the objectives of the solutions in embodiments.

In addition, functional units in embodiments of the disclosure may be integrated into one processing unit, each of the units may exist alone physically, or two or more units are integrated into one unit.

When the functions are implemented in the form of a software functional unit and sold or used as an independent product, the functions may be stored in a computer-readable storage medium. According to this understanding, the technical solutions of the disclosure essentially, or the part contributing to the conventional technology, or some of the technical solutions may be implemented in a form of a software product. The computer software product is stored in a storage medium, and includes several instructions for instructing a computer device (which may be, for example, a personal computer, a server, or a network device) to perform all or some of the steps of the methods described in embodiments of the disclosure. The foregoing storage medium includes various mediums that can store program code, such as a USB flash drive, a removable hard disk, a read-only memory (ROM), a random access memory (RAM), a magnetic disk, or an optical disc.

A sequence of the steps of the method in embodiments of the disclosure may be adjusted, combined, or deleted according to an actual requirement.

The modules in the apparatus in embodiments of the disclosure may be combined, divided, or deleted according to an actual requirement.

The foregoing embodiments are merely intended for describing the technical solutions of the disclosure, but not for limiting the disclosure. Although the disclosure is described in detail with reference to the foregoing embodiments, persons of ordinary skill in the art may understand that they may still make modifications to the technical solutions described in the foregoing embodiments or make equivalent replacements to some technical features thereof, without departing from the scope of the technical solutions of embodiments of the disclosure.

**Claims**

1.  A method for controlling transmission power of a digital infrared conference unit, wherein the method is applied to an infrared conference host, the infrared conference host is located in an infrared conference system, the infrared conference system further comprises a plurality of infrared conference units, and the method comprises:

    receiving a first uplink signal of each of at least one infrared conference unit from the at least one infrared conference unit among the plurality of conference units, wherein the first uplink signal of each infrared conference unit is sent by each infrared conference unit at a first transmission power of each infrared conference unit;
    obtaining a first signal strength of the first uplink signal of each infrared conference unit;
    determining first control data for each infrared conference unit according to the first signal strength corresponding to each infrared conference unit and a preset signal strength, wherein the first control data for each infrared conference unit is used to determine a next transmission power of each infrared conference unit;
    sending a first downlink signal to the at least one infrared conference unit, wherein the first downlink signal contains the first control data for each infrared conference unit; and
    receiving a second uplink signal of each infrared conference unit from each infrared conference unit, wherein a second signal strength of the second uplink signal of each infrared conference unit is the preset signal strength, the second uplink signal is sent by each infrared conference unit at a second transmission power, and the second transmission power is determined by each infrared conference unit according to the first control data for each infrared conference unit.

2.  The method of claim 1, wherein before determining the first control data for each infrared conference unit according to the first signal strength corresponding to each infrared conference unit and the preset signal strength, the method further comprises:

    obtaining an environment noise figure; and
    predicting a third signal strength of the first uplink signal of each infrared conference unit according to the environment noise figure, a distance to each infrared conference unit, and the first transmission power of each infrared conference unit; and
    determining the first control data for each infrared conference unit according to the first signal strength corresponding to each infrared conference unit and the preset signal strength comprises:

    for a first infrared conference unit, calculating a difference between a third signal strength of the first infrared conference unit and a first signal strength corresponding to the first infrared conference unit, wherein the first infrared conference unit is any one of the at least one infrared conference unit;
    determining first control data for the first infrared conference unit according to the first signal strength corresponding to the first infrared conference unit and the preset signal strength, in response to the difference being less than or equal to a first threshold; and
    obtaining $t$-1 second uplink signals sent by the first infrared conference unit before sending the first uplink signal, in response to the first difference being greater than the first threshold; and determining the first control data for the first infrared conference unit according to $t$ uplink signals and the first signal strength, wherein the $t$ uplink signals comprise the first uplink signal and the $t$-1 second uplink signals.

3.  The method of claim 2, wherein determining the first control data for the first infrared conference unit according to the $t$ uplink signals and the first signal strength comprises:

    determining a difference between a fourth signal strength of each of the $t$ uplink signals and a fifth signal strength of each of the $t$ uplink signals, wherein the fourth signal strength is determined by the infrared conference host according to a noise figure, and the fifth signal strength is determined by the infrared conference host according to each uplink signal;
    determining the first control data for the first infrared conference unit according to the first signal strength and the preset signal strength, in response to differences corresponding to the t uplink signals being all greater than the first threshold; and
    determining the first control data for the first infrared conference unit according to the first transmission power, in response to a difference among the differences corresponding to the $t$ uplink signals being less than or equal to the first threshold.

4.  The method of any one of claims 1 to 3, wherein the first control data for each infrared conference unit is a difference between the first signal strength corresponding to each infrared conference unit and the preset signal strength.

5. The method of any one of claims 1 to 4, wherein the first transmission power of each infrared conference unit is a maximum transmission power of each infrared conference unit, when the first uplink signal of each infrared conference unit is sent by each infrared conference unit to the infrared conference host for the first time.

6. A method for controlling transmission power of a digital infrared conference unit, wherein the method is applied to a first infrared conference unit, the first infrared conference unit is located in an infrared conference system, the infrared conference system comprises an infrared conference host and a plurality of infrared conference units, and the method comprises:

sending a first uplink signal to the infrared conference host at a first transmission power, wherein the first infrared conference unit is any one of at least one infrared conference unit among the plurality of conference units, and the at least one infrared conference unit simultaneously sends the first uplink signal to the infrared conference host;
receiving a first downlink signal for the first uplink signal from the infrared conference host, wherein the first downlink signal contains first control data for each of the at least one infrared conference unit, the first control data for each infrared conference unit is determined by the infrared conference host according to a first signal strength of the first uplink signal of each infrared conference unit and a preset signal strength, and the first control data for each infrared conference unit is used to determine a next transmission power of each infrared conference unit;
obtaining first control data for the first infrared conference unit from the first downlink signal;
determining a second transmission power of the first infrared conference unit according to the first control data for the first infrared conference unit; and
sending a second uplink signal to the infrared conference host at the second transmission power, wherein a second signal strength of the second uplink signal of the first infrared conference unit received by the infrared conference host is the preset signal strength.

7. The method of claim 6, wherein determining the second transmission power of the first infrared conference unit according to the first control data for the first infrared conference unit comprises:

obtaining a power adjustment coefficient corresponding to the first infrared conference unit according to the first control data for the first infrared conference unit; and
adjusting the first transmission power of the first infrared conference unit according to the power adjustment coefficient corresponding to the first infrared conference unit, and obtaining the second transmission power of the first infrared conference unit.

8. The method of claim 6 or 7, wherein the first transmission power is a maximum transmission power of the first infrared conference unit, when the first uplink signal is sent by the first infrared conference unit to the infrared conference host for the first time.

9. A communication apparatus comprising a processor and a memory, wherein the processor is connected to the memory, the memory is configured to store a computer program, and the processor is configured to perform the computer program stored in the memory to make the communication apparatus perform the method of any one of claims 1 to 8.

10. A computer-readable storage medium storing a computer program which, when executed by a processor, causes the processor to implement the method of any one of claims 1 to 8.

FIG. 1A

**INFRARED CONFERENCE HOST**

**INFRARED CONFERENCE UNIT 200**

**INFRARED CONFERENCE UNIT 20n**

| | |
|---|---|
| MAIN PROCESSOR 1001 | |
| DIGITAL-INFRARED-SIGNAL DEMODULATOR 1 | RECEIVED-SIGNAL STRENGTH DETECTOR 1 |
| FREQUENCY SELECTIVE CIRCUIT 1 | |

......

| DIGITAL-INFRARED-SIGNAL DEMODULATOR n | RECEIVED-SIGNAL STRENGTH DETECTOR n | FREQUENCY SELECTIVE CIRCUIT n |

INFRARED RECEIVER 1002

DIGITAL-INFRARED-SIGNAL MODULATOR 1003 — INFRARED-TRANSMISSION-SIGNAL CONTROL CIRCUIT 1004 — INFRARED EMITTER 1005

INFRARED EMITTER 2006 — INFRARED-TRANSMISSION-SIGNAL CONTROL CIRCUIT 2005 — DIGITAL-INFRARED-SIGNAL MODULATOR 2004 — MAIN PROCESSOR 2001

INFRARED RECEIVER 2003 — DIGITAL-INFRARED-SIGNAL DEMODULATOR 2002

......

INFRARED EMITTER 20n6 — INFRARED-TRANSMISSION-SIGNAL CONTROL CIRCUIT 20n5 — DIGITAL-INFRARED-SIGNAL MODULATOR 20n4 — MAIN PROCESSOR 20n1

INFRARED RECEIVER 20n3 — DIGITAL-INFRARED-SIGNAL DEMODULATOR 20n2

FIG. 1B

INFRARED
CONFERENCE
HOST

AT LEAST ONE INFRARED CONFERENCE UNIT

| INFRARED CONFERENCE UNIT | INFRARED CONFERENCE UNIT | ······ | INFRARED CONFERENCE UNIT |

201, SEND FIRST UPLINK SIGNAL AT FIRST
TRANSMISSION POWER

202, RECEIVE FIRST UPLINK SIGNAL, AND
OBTAIN FIRST SIGNAL STRENGTH OF FIRST
UPLINK SIGNAL

203, DETERMINE FIRST CONTROL DATA
ACCORDING TO FIRST SIGNAL STRENGTH
AND PRESET SIGNAL STRENGTH

204, SEND FIRST DOWNLINK SIGNAL FOR
FIRST UPLINK SIGNAL

205, RECEIVE FIRST DOWNLINK SIGNAL
CONTAINING FIRST CONTROL DATA , AND
DETERMINE SECOND TRANSMISSION POWER
ACCORDING TO FIRST CONTROL DATA

206, SEND SECOND UPLINK SIGNAL AT SECOND
TRANSMISSION POWER

207, RECEIVE SECOND UPLINK SIGNAL ,
WHERE SECOND SIGNAL STRENGTH OF
SECOND UPLINK SIGNAL IS PRESET SIGNAL
STRENGTH

FIG. 2A

FIRST SIGNAL STRENGTH

CARRIER
FREQUENCY

FREQUENCY 1   FREQUENCY 2   FREQUENCY 3   FREQUENCY 4

FIG. 2B

SECOND SIGNAL STRENGTH

CARRIER
FREQUENCY

FREQUENCY 1   FREQUENCY 2   FREQUENCY 3   FREQUENCY 4

FIG. 2C

INFRARED CONFERENCE HOST 300

| TRANSCEIVING UNIT 301 | PROCESSING UNIT 302 |

FIG. 3

INFRARED CONFERENCE UNIT 400

| TRANSCEIVING UNIT 401 | PROCESSING UNIT 402 |

FIG. 4

500

PROCESSOR 502

504

TRANSCEIVER 501

MEMORY 503

COMPUTER PROGRAM

DATA

COMMUNICATION APPARATUS

FIG. 5

## INTERNATIONAL SEARCH REPORT

| International application No. |
| --- |
| **PCT/CN2023/131276** |

**A.    CLASSIFICATION OF SUBJECT MATTER**

H04W 52/24(2009.01)i

According to International Patent Classification (IPC) or to both national classification and IPC

**B.    FIELDS SEARCHED**

Minimum documentation searched (classification system followed by classification symbols)

IPC：H04W

Documentation searched other than minimum documentation to the extent that such documents are included in the fields searched

Electronic data base consulted during the international search (name of data base and, where practicable, search terms used)

CNTXT, CNABS, WPABS, WPABSC, ENTXT, ENTXTC, DWPI, CNKI, IEEE: 红外, 会议, 发射, 功率, 强度, 自动, 增益, 控制, 调整, 调节, infrared, conference, transmit+, power, intensity, auto, gain, control+, AGC, adjust+

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 101159572 A (SHENZHEN TAIDEN INDUSTRIAL CO., LTD.) 09 April 2008 (2008-04-09)<br>     description, pages 7-9, and figure 1 | 1, 4-10 |
| Y | US 2003128988 A1 (ZILOG, INC.) 10 July 2003 (2003-07-10)<br>     description, paragraphs [0021]-[0029] | 1, 4-10 |
| A | CN 103888273 A (XU ZHONG et al.) 25 June 2014 (2014-06-25)<br>     entire document | 1-10 |
| A | WO 2020132862 A1 (GUANGDONG OPPO MOBILE TELECOMMUNICATIONS CORP., LTD.) 02 July 2020 (2020-07-02)<br>     entire document | 1-10 |
| A | US 7194209 B1 (XANTECH CORP.) 20 March 2007 (2007-03-20)<br>     entire document | 1-10 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 June 2024** | **14 June 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/131276**

| Patent document cited in search report | | | Publication date (day/month/year) | Patent family member(s) | | | Publication date (day/month/year) |
|---|---|---|---|---|---|---|---|
| CN | 101159572 | A | 09 April 2008 | WO | 2009026836 | A1 | 05 March 2009 |
| | | | | DE | 212008000014 | U1 | 15 October 2009 |
| US | 2003128988 | A1 | 10 July 2003 | US | 6590682 | B1 | 08 July 2003 |
| | | | | WO | 0010269 | A1 | 24 February 2000 |
| CN | 103888273 | A | 25 June 2014 | None | | | |
| WO | 2020132862 | A1 | 02 July 2020 | CN | 112640539 | A | 09 April 2021 |
| US | 7194209 | B1 | 20 March 2007 | None | | | |

Form PCT/ISA/210 (patent family annex) (July 2022)